# EUROPÄISCHE PATENTSCHRIFT

(11) **EP 3 540 161 B1**
(45) Veröffentlichungstag und Bekanntmachung des Hinweises auf die Patenterteilung: **13.12.2023**
(21) Anmeldenummer: 19159627.9
(22) Anmeldetag: 27.02.2019
(51) Int. Cl.: E05D 11/02, E05D 15/46, E05D 15/52

(54) **BESCHLAGTEIL FÜR EINEN TREIBSTANGENBESCHLAG**
FITTING PART FOR AN ESPAGNOLETTE FITTING
FERRURE POUR FERRURE À CRÉMONE

(30) Priorität: 15.03.2018 DE 102018203960
(43) Veröffentlichungstag der Anmeldung: 18.09.2019
(73) Patentinhaber: Aug. Winkhaus GmbH & Co. KG, 48291 Telgte (DE)
(72) Erfinder: Kushtilov, Boyko, 48159 Münster (DE)

(56) Entgegenhaltungen:
- EP-A2- 0 106 693
- EP-A2- 0 207 761
- WO-A2-2004/105457
- DE-A1-102006 035 416
- FR-A5- 2 149 176
- GB-A- 2 071 757
- GB-A- 2 094 880
- US-A- 5 735 021

## Beschreibung

Die Erfindung betrifft ein Beschlagteil für einen Treibstangenbeschlag eines Fensters, einer Fenstertür oder dergleichen mit zwei relativ zueinander beweglichen Bauteilen und mit einem Lagerspalt zwischen den beiden zueinander beweglichen Bauteilen.

Ein solches Beschlagteil ist beispielsweise aus der US 5 735 021 A bekannt. Bei diesem Beschlagteil ist ein Hülsenteil auf einem Lagerbolzen befestigt und hintergreift einen Lenkerarm. Zum Hintergreifen des Lenkerarms hat das Hülsenteil federnde Haken.

Aus der EP 1 612 354 A2 ist eine Lagereinrichtung für ein Fenster bekannt geworden, bei dem ein Scherenarm und ein Lenkerarm am rahmenseitigen Beschlagteil vormontiert werden. Der Scherenarm und der Lenkerarm weisen jeweils Gelenkbolzen auf, mit denen sie von oben in das flügelseitige Beschlagteil eingedrückt werden. Der Gelenkbolzen hat zwangsläufig gegenüber zumindest eines der Bauteile des Scherenarms oder des Lenkerarms einen Lagerspalt.

Aus der EP 2 395 189 A2 ist ein oberes Lager für einen gegen einen Rahmen schwenkbaren Flügel bekannt geworden, bei dem ein Beschlagteil zweiteilig gestaltet ist. Auch bei diesem oberen Lager ist ein Lagerspalt vorhanden.

Solche Lagerspalte werden von Gleitflächen der angrenzenden Bauteile begrenzt und bei der Montage in der Regel mit gewöhnlichem Schmierfett behandelt. Damit wird eine möglichst reibungslose Bewegungsfunktion sichergestellt. Nachteilig bei dem bekannten Beschlagteil ist jedoch, dass das Schmierfett sich auf Dauer verflüchtigt oder verharzt. Zudem sind besondere geometrische Konturen wie beispielsweise Schmiertaschen erforderlich. Oft sind die Lagerspalte zum Nachschmieren nur schwer zugänglich oder das Nachschmieren wird vergessen. Dies führt auf Dauer zu einer Erhöhung der Betätigungskraft und zu störenden Geräuschen. Weiterhin erhöht sich durch die nachlassende Schmierung der Verschließ der an den Lagerspalt angrenzenden Bauteile.

Der Erfindung liegt das Problem zugrunde, ein Beschlagteil der eingangs genannten Art so zu gestalten, dass eine möglichst reibungsarme Bewegungsfunktion der Bauteile auf Dauer sichergestellt ist.

Dieses Problem wird erfindungsgemäß dadurch gelöst, dass in dem Lagerspalt ein ablauffestes, plastisch verformbares Material angeordnet ist.

Durch diese Gestaltung gleicht das plastisch verformbare Material Toleranzen in dem Lagerspalt aus. Jedoch ist das Material verformbar und stellt damit dauerhaft Schmiereigenschaften im Lagerspalt sicher. Das plastisch verformbare Material ermöglicht daher ein gleichmäßiges Gleiten der Bauteile ohne Rattermarken oder Geräusche zu erzeugen. Dabei kann es genügen, dass das plastisch verformbare Material nur in einem Teilbereich des Lagerspaltes angeordnet ist. Vorzugsweise weist das Material über den für eine Tür oder ein Fenster typischen Temperaturbereich weitgehend konstante Eigenschaften auf. Das plastisch verformbare Material ist in allen Lagen einsetzbar. Es kann zwischen zwei oder mehr relativ zueinander beweglichen Bauteilen mit einem Lagerspalt eingesetzt werden, so z.B. zwischen Lagerachsen und Lenkern oder zwischen den Lenkern.

Ein Verkanten des Kopfteils auch bei großen Toleranzen im Lagerspalt lässt sich gemäß einer anderen vorteilhaften Weiterbildung der Erfindung zuverlässig verhindern, wenn sich das plastisch verformbare Material über die gesamte Höhe des Lagerspaltes erstreckt.

Die Bauteile vermögen gemäß einer anderen vorteilhaften Weiterbildung der Erfindung besonders leichtgängig aneinander entlanggleiten, wenn das plastisch verformbare Material viskose Eigenschaften aufweist.

Als plastisch verformbares Material lässt sich gemäß einer anderen vorteilhaften Weiterbildung der Erfindung kostengünstige Handelsware einsetzen, wenn das plastisch verformbare Material ein Polyesterharz ist. Ein solches Polyesterharz wird in der Praxis als dauerplastische Universaldichtung zur Abdichtung von Maschinen-, Getriebe- und Motorgehäusen eingesetzt und ist beispielsweise unter dem Handelsnamen Plast-o-Seal der Firma Weicon GmbH & Co KG bekannt.

Das plastisch verformbare Material weist gemäß einer anderen vorteilhaften Weiterbildung der Erfindung besonders gute Schmiereigenschaften auf, wenn das plastisch verformbare Material ein Additiv zur Erhöhung der Gleiteigenschaften hat. Solche Additive können allgemein bekannte Schmierstoffe sein, sofern sie die Materialeigenschaften des plastisch verformbaren Materials nicht negativ beeinflussen. Beispielsweise könnte das plastisch verformbare Material mit Schmierfett angereichert sein oder Partikel aus einem Trockenschmierstoff wie Graphit enthalten.

Ein Ablaufen des plastisch verformbaren Materials aus dem Lagerspalt lässt sich gemäß einer anderen vorteilhaften Weiterbildung der Erfindung zuverlässig vermeiden, wenn zumindest eine der den Lagerspalt begrenzenden Fläche der beiden zueinander beweglichen Bauteile eine hohe Rauhigkeit zur Erhöhung der Adhäsion mit dem plastisch verformbaren Material aufweist.

Zur Verbesserung der Ablauffestigkeit des plastisch verformbaren Materials trägt es gemäß einer anderen vorteilhaften Weiterbildung der Erfindung bei, wenn zumindest eines der beiden relativ zueinander beweglichen Bauteile Vertiefungen zur Erhöhung der Adhäsion mit dem plastisch verformbaren Material aufweist.

Der Treibstangenbeschlag gestaltet sich gemäß einer anderen vorteilhaften Weiterbildung der Erfindung besonders reibungsarm, wenn eines der beiden relativ zueinander beweglichen Bauteile eine Lagerachse und das andere der Bauteile ein Lagerauge hat. Durch diese Gestaltung lassen sich mehrere Bauteile in dem Treibstangenbeschlag einsetzen.

Das Beschlagteil lässt sich gemäß einer anderen vorteilhaften Weiterbildung der Erfindung vielseitig in Treibstangenbeschlägen einsetzen, wenn die beiden relativ zueinander beweglichen Bauteile Teile eines Scherenlagers, Mehrgelenklager oder Kniehebelgetriebe sind.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig. 1: perspektivisch ein Fenster mit einem Mehrgelenklager in Drehstellung,
- Fig. 2: Bauteile des Mehrgelenklagers aus Figur 1 vor der Montage,
- Fig. 3: eine Schnittdarstellung durch eine Lagerung des Mehrgelenklagers aus Figur 2 entlang der Linie III - III.

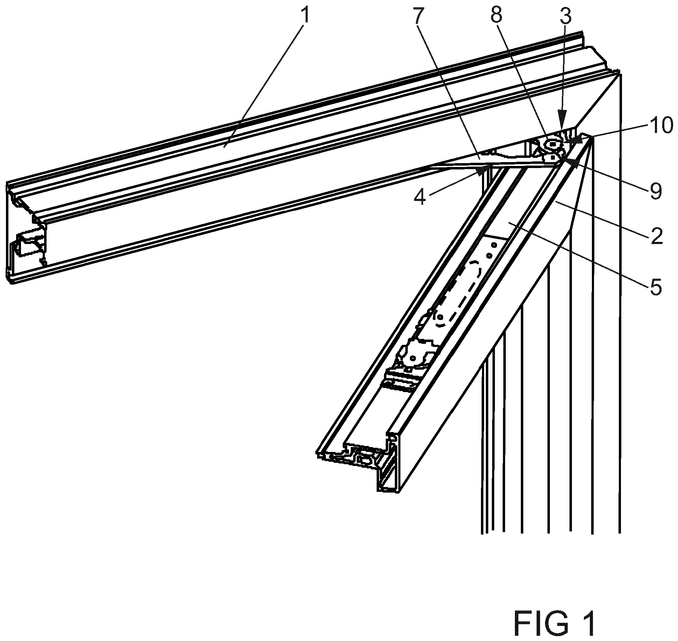

Figur 1 zeigt einen oberen rechten Eckbereich eines Fensters mit einem gegen einen Rahmen 1 schwenkbaren Flügel 2 und mit einem als Mehrgelenklager 3 ausgebildetes Beschlagteil. Das Fenster befindet sich in einer Drehstellung, in der der Flügel 2 um eine vertikale Achse von dem Rahmen 1 weggedreht ist. Für diese Drehbewegung hat das Fenster in diesem Ausführungsbeispiel eine verdeckt angeordnete Lenkeranordnung 4.

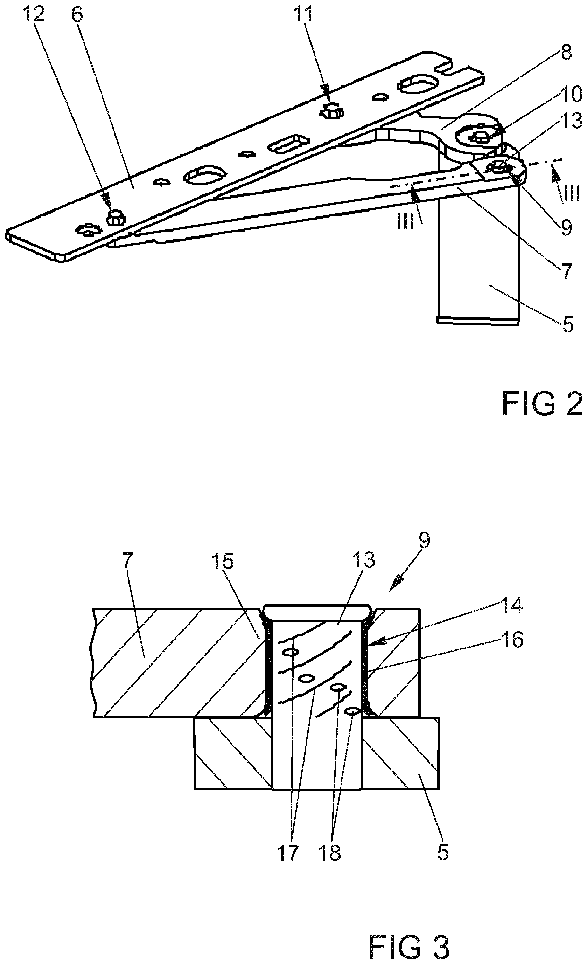

Figur 2 zeigt einen Teilbereich des Scherenlagers 3 vor der Montage in einer Ansicht von oben. Hierbei ist zu erkennen, dass das Scherenlager 3 ein einem flügelseitigen Beschlagteil 5 gegenüberstehendes rahmenseitiges Beschlagteil 6 hat. Die Lenkeranordnung 4 verbindet das rahmenseitige Beschlagteil 6 mit dem flügelseitigen Beschlagteil 5. In einer alternativen, nicht dargestellten Ausführungsform kann die Lenkeranordnung 4 auch an einem mit dem flügelseitigen Beschlagteil 4 gekoppelten Scherenarm angelenkt sein. Solche Scherenarme werden in Scherenlagern von Dreh-Kipp Beschlägen eingesetzt.

Wie die Figuren 1 und 2 zeigen, hat die Lenkeranordnung 4 zwei Lenker 7, 8, welche jeweils über Lagerungen 9 - 12 mit dem flügelseitigen Beschlagteil 5 und dem rahmenseitigen Beschlagteil 6 angelenkt sind. Die Lagerungen 9 - 12 weisen jeweils Lagerachsen 13 auf.

Figur 3 zeigt einen Längsschnitt durch eine der Lagerungen 9 aus Figur 2 entlang der Linie III - III. Hierbei ist zu erkennen, dass die Lagerachse 13 in dem flügelseitigen Beschlagteil 5 eingepresst ist und gegenüber dem einen Lenker 7 mit einem Lagerspalt 14 gelagert ist. Der Lenker 7 hat damit ein Lagerauge 15 für die Lagerung 9. In dem Lagerspalt 14 ist ein ablauffestes, plastisch verformbares Material 16 angeordnet. Das plastisch verformbare Material 16 gleicht Toleranzen zwischen den Bauteilen aus und stellt Gleiteigenschaften der Lagerung 9 sicher. Weiterhin verhindert das plastisch verformbare Material 16 Axialbewegungen der Bauteile zueinander. Das plastisch verformbare Material 16 ist ein Polyesterharz, welches in der Praxis auch für Abdichtungen von Motorengehäusen verwendet wird. Das plastisch verformbare Material 16 kann zudem ein Additiv zur Verbesserung der Gleiteigenschaften enthalten. Die Lagerachse 13 hat Riffelungen zur Erzeugung einer hohen Rauhigkeit 17 und Vertiefungen 18 zur Erhöhung der Adhäsion mit dem plastisch verformbaren Material 16.

## Patentansprüche

1. Beschlagteil für einen Treibstangenbeschlag eines Fensters, einer Fenstertür oder dergleichen mit zwei relativ zueinander beweglichen Bauteilen und mit einem Lagerspalt (14) zwischen den beiden zueinander beweglichen Bauteilen, **dadurch gekennzeichnet, dass** in dem Lagerspalt (14) ein ablauffestes, plastisch verformbares Material (16) angeordnet ist.

2. Beschlagteil nach Anspruch 1, **dadurch gekennzeichnet, dass** das plastisch verformbare Material (16) über die gesamte Höhe des Lagerspaltes erstreckt.

3. Beschlagteil nach Anspruch 1 oder 2, **dadurch gekennzeichnet, dass** das plastisch verformbare Material (16) viskose Eigenschaften aufweist.

4. Beschlagteil nach zumindest einem der vorhergehenden Ansprüche, **dadurch gekennzeichnet, dass** das plastisch verformbare Material (16) ein Polyesterharz ist.

5. Beschlagteil nach zumindest einem der vorhergehenden Ansprüche, **dadurch gekennzeichnet, dass** das plastisch verformbare Material (16) ein Additiv zur Erhöhung der Gleiteigenschaften hat.

6. Beschlagteil nach zumindest einem der vorhergehenden Ansprüche, **dadurch gekennzeichnet, dass** zumindest eine der den Lagerspalt (14) begrenzenden Fläche der beiden zueinander beweglichen Bauteile eine hohe Rauhigkeit (17) zur Erhöhung der Adhäsion mit dem plastisch verformbaren Material (16) aufweist.

7. Beschlagteil nach zumindest einem der vorhergehenden Ansprüche, **dadurch gekennzeichnet, dass** zumindest eines der beiden relativ zueinander beweglichen Bauteile Vertiefungen (18) zur Erhöhung der Adhäsion mit dem plastisch verformbaren Material (16) aufweist.

8. Beschlagteil nach zumindest einem der vorhergehenden Ansprüche, **dadurch gekennzeichnet, dass** eines der beiden relativ zueinander beweglichen Bauteile eine Lagerachse (13) und das andere der Bauteile ein Lagerauge (15) hat.

9. Beschlagteil nach zumindest einem der vorhergehenden Ansprüche, **dadurch gekennzeichnet, dass** die beiden relativ zueinander beweglichen Bauteile Teile eines Scherenlagers, Mehrgelenklager (3) oder Kniehebelgetriebe sind.

## Claims

1. Fitting part for a drive rod fitting of a window, a window door or the like, having two components that are movable relative to one another and having a bearing gap (14) between the two components that are movable relative to one another, **characterized in that** a non-running, plastically deformable material (16) is arranged in the bearing gap (14).

2. Fitting part according to claim 1, **characterized in that** the plastically deformable material (16) extends over the entire height of the bearing gap.

3. Fitting part according to either claim 1 or claim 2, **characterized in that** the plastically deformable material (16) has viscous properties.

4. Fitting part according to at least one of the preceding claims, **characterized in that** the plastically deformable material (16) is a polyester resin.

5. Fitting part according to at least one of the preceding claims, **characterized in that** the plastically deformable material (16) has an additive for increasing the sliding properties.

6. Fitting part according to at least one of the preceding claims, **characterized in that** at least one of the surfaces of the two components that are movable relative to one another that delimit the bearing gap (14) has a high roughness (17) for increasing the adhesion to the plastically deformable material (16).

7. Fitting part according to at least one of the preceding claims, **characterized in that** at least one of the two components that are movable relative to one another has depressions (18) for increasing the adhesion to the plastically deformable material (16).

8. Fitting part according to at least one of the preceding claims, **characterized in that** one of the two components that are movable relative to one another has a bearing shaft (13) and the other of the components has a bearing lug (15).

9. Fitting part according to at least one of the preceding claims, **characterized in that** the two components that are movable relative to one another are parts of a scissor bearing, multi-joint bearing (3) or toggle lever mechanism.

## Revendications

1. Partie de ferrure pour une ferrure de type crémone d'une fenêtre, d'une porte de fenêtre ou similaire, comportant deux composants mobiles l'un par rapport à l'autre et comportant une fente de palier (14) entre les deux composants mobiles l'un par rapport à l'autre, **caractérisée en ce qu'**un matériau plastiquement déformable (16) et résistant à l'écoulement est disposé dans la fente de palier (14).

2. Partie de ferrure selon la revendication 1, **caractérisée en ce que** le matériau plastiquement déformable (16) s'étend sur toute la hauteur de la fente de palier.

3. Partie de ferrure selon la revendication 1 ou 2, **caractérisée en ce que** le matériau plastiquement déformable (16) présente des propriétés visqueuses.

4. Partie de ferrure selon au moins l'une des revendications précédentes, **caractérisée en ce que** le matériau plastiquement déformable (16) est une résine polyester.

5. Partie de ferrure selon au moins l'une des revendications précédentes, **caractérisée en ce que** le matériau plastiquement déformable (16) comprend un additif permettant d'augmenter les propriétés de glissement.

6. Partie de ferrure selon au moins l'une des revendications précédentes, **caractérisée en ce qu'**au moins l'une des surfaces délimitant la fente de palier (14) des deux composants mobiles l'un par rapport à l'autre présente une rugosité élevée (17) permettant d'augmenter l'adhérence au matériau plastiquement déformable (16).

7. Partie de ferrure selon au moins l'une des revendications précédentes, **caractérisée en ce qu'**au moins l'un des deux composants mobiles l'un par rapport à l'autre présente des cavités (18) permettant d'augmenter l'adhérence au matériau plastiquement déformable (16).

8. Partie de ferrure selon au moins l'une des revendications précédentes, **caractérisée en ce que** l'un des deux composants mobiles l'un par rapport à l'autre comprend un axe de palier (13) et l'autre des composants comprend un oeillet de palier (15).

9. Partie de ferrure selon au moins l'une des revendications précédentes, **caractérisée en ce que** les deux composants mobiles l'un par rapport à l'autre sont des parties d'un palier à ciseaux, d'un palier à plusieurs articulations (3) ou d'un mécanisme à genouillère.
